# EUROPEAN PATENT SPECIFICATION

(11) **EP 3 305 603 B1**
(45) Date of publication and mention of the grant of the patent: **14.08.2019**
(21) Application number: 16192871.8
(22) Date of filing: 07.10.2016
(51) Int. Cl.: B60R 21/235

(54) **AN AIR-BAG**
EIN AIR-BAG
UN AIR-BAG

(43) Date of publication of application: 11.04.2018
(73) Proprietor: Autoliv Development AB, 447 83 Vårgårda (SE)
(72) Inventor: FINN,Hugh, Culcheth Warrington WA3 4LG (GB); STOW, David, 41678 Gothenburg (SE)
(74) Representative: Rusby-Gale, Daniel Matthew

(56) References cited:
- WO-A1-03/080402

## Description

The present invention relates to an air-bag for use in a vehicle and a method of manufacturing an air-bag for a vehicle. The invention more particularly relates to a reinforcement arrangement for an air-bag to protect the air-bag from high temperature gasses.

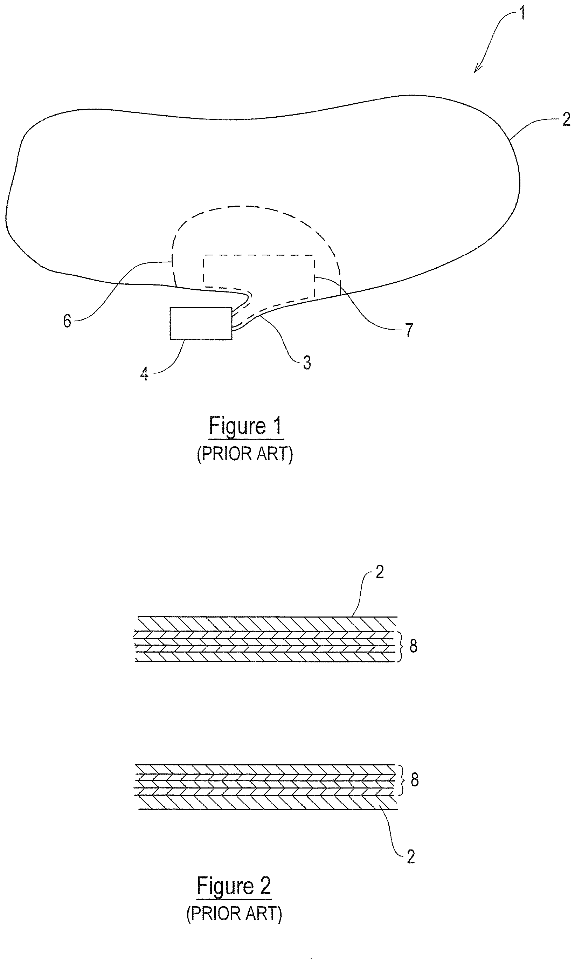

Referring to figure 1 of the accompanying drawings, a conventional air-bag 1 comprises two superimposed fabric layers 2 (only one of which is visible in figure 1). The air-bag 1 comprises an inlet 3 which is coupled to a gas generator 4. The gas generator 4, upon activation, outputs gas which passes through the inlet 3 and into a chamber 5 between the layers of fabric 2 of the air-bag 1. The pressure of gas inflates the air-bag 1.

A throat portion 6 of the air-bag 1 is a portion of the air-bag 1 which is positioned at or adjacent to the inlet 3 and which is subject to high temperatures from gas generated by the gas generator 4.

A reinforcement arrangement is usually provided at the throat portion 6 of the air-bag 1 to protect the throat portion 6 from the high temperature gas from the gas generator 4. The reinforcement arrangement is typically in the form of a gas guide 7 which is mounted within the air-bag 1 to protect the throat portion 6. The gas guide 7 is typically a Y-sock but can be any other type of gas guide, such as an H-sock or a tube.

Referring now to figure 2 of the accompanying drawings, the gas guide 7 comprises a plurality of coated layers 8 which are superimposed and fixed to one another. The layers 8 of the gas guide 7 cover the inner face of the throat portion 6 of the air-bag 1 to protect the layers of fabric 2 of the air-bag 1 from the high temperature gases from the gas generator 4. A conventional gas guide may comprise as many as eleven or more layers of coated fabric.

A conventional air-bag may also be provided with a plastic or metal reinforcement element (not shown) which is provided in conjunction with the gas guide 7 to provide additional protection from the high temperature gases from the gas generator 4.

The conventional throat reinforcement arrangements described above are effective in protecting the fabric at a throat portion of an air-bag. However, the high number of coated reinforcing layers in the gas guide and/or the plastic or metal reinforcement element undesirably add weight to the air-bag and can result in the air-bag being overly rigid and difficult to fold.

WO03/080402 A1 is the closest prior art document which addresses the problem of protecting the region of an air bag immediately surrounding the gas generator against the heat produced by the emerging hot gas. WO03/080402 A1 discloses a woven reinforcement element formed by two layers of fabric that are selectively interconnected to form a plurality of adjacent substantially hermetically sealed cells or chambers. When the air bag is deployed the gas generator warms up the air contained within the hermetically sealed cells within the reinforcement element. The cells will consequently expand. The air trapped within the cells will act as a thermal insulation layer, and thus the reinforcement element, when the air in the cells has expanded, will provide good thermal insulation properties, thus minimising the risk of the fabric of the air-bag becoming comprised in any way.

The present invention seeks to provide an improved air-bag.

According to one aspect of the present invention, there is provided an air-bag as defined in claim 1 hereinafter.

Advantageously, the cells are open ended chambers formed in the mesh structure of the intermediate layer.

In one embodiment, the mesh structure of the intermediate layer is a woven structure.

In another embodiment, the mesh structure of the intermediate layer is a knitted structure.

Preferably, the density of the warp and weft yarns of the intermediate layer is 22 threads/cm in the warp direction and 90 threads/cm in the weft direction.

Conveniently, the mesh structure of the intermediate layer comprises at least one material selected from a group including Nylon, aramid, polycarbonate, basalt and Nomex™.

In one embodiment, the mesh structure of the intermediate layer is of extruded plastic.

Preferably, the air-bag further comprises a further additional layer which is at least partly positioned between the intermediate layer and the fabric layer.

Conveniently, the intermediate layer is fixed to the additional layer and the further additional layer to form a reinforcement arrangement which is at least partly superimposed on the fabric layer.

Advantageously, the largest width of each of the cells of the intermediate layer is between 3mm and 20mm.

Preferably, the gas permeability of the intermediate layer is substantially five times greater than the gas permeability of the fabric layer.

According to another aspect of the present invention, there is provided a reinforcement arrangement as defined in claim 13 hereinafter.

According to a further aspect of the present invention, there is provided a method as defined in claim 14 hereinafter.

So that the present invention may be more readily understood, embodiments of the present invention will now be described, by way of example, with reference to the accompanying drawings, in which:
Figure 1 is a diagrammatic view of a conventional air-bag with a gas guide,
Figure 2 is a diagrammatic cross-sectional view of part of the gas guide and a throat portion of the air-bag of figure 1,
Figure 3 is a diagrammatic view of an air-bag of an embodiment of the invention,
Figure 4 is a diagrammatic cross-sectional view of part of an air-bag of an embodiment of the invention,
Figure 5 is a diagrammatic plan view of part of an intermediate layer of the air-bag of figure 4,
Figure 6 is a diagrammatic plan view of part of an intermediate layer of an air-bag of a further embodiment of the invention,
Figure 7 is a diagrammatic perspective view of a reinforcement arrangement of an embodiment of the invention, and
Figure 8 is a diagrammatic cross-sectional view of the reinforcement arrangement of figure 7.

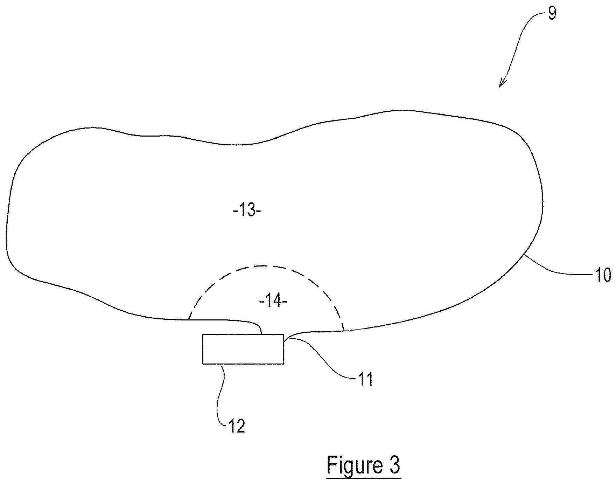

Referring now to figure 3 of the accompanying drawings, an air-bag 9 of an embodiment of the invention comprises two superimposed fabric layers 10 (only one of which is visible in figure 3). The layers of fabric 10 are typically integrated with one another and manufactured using a one piece weaving technique. The fabric layers 10 comprise a plurality of interwoven warp and weft yarns.

The air-bag of an embodiment of the invention may be a front air-bag, a side air-bag, a curtain air-bag, a pedestrian protecting air-bag or any other type of vehicle air-bag.

The air-bag 9 comprises an inlet 11 which is configured to be coupled fluidly to a gas generator 12, as shown in figure 3. The gas generator 12, upon activation, injects gas into the air-bag 9 via the inlet 11 to inflate an internal chamber 13 between the layers of fabric 10.

A throat portion 14 of the air-bag 9 is a portion of the air-bag 9 which is positioned at or adjacent to the inlet 11 and which is subject to high temperatures from gas generated by the gas generator 12. For instance, in one embodiment the throat portion 14 is a portion of the air-bag 9 which is positioned immediately adjacent to the inlet 11 such that gas output from the gas generator 12 acts directly on the throat portion 14 as the air-bag inflates.

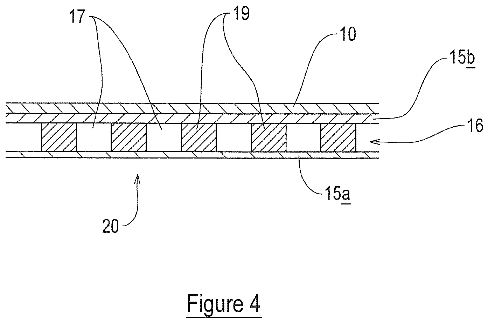

Referring now to figure 4 of the accompanying drawings, the air-bag 9 comprises a reinforcement arrangement incorporating an additional layer 15a which is at least partly superimposed on a part of a fabric layer 10 of the air-bag 9. In this embodiment, the additional layer 15a is at least partly superimposed on a part of the fabric layer 10 of the air-bag 9 at the throat portion of the air-bag 9. In other embodiments, the additional layer 15a is superimposed on a different portion of the fabric of the air-bag 9 which requires reinforcement from high temperatures.

The air-bag 9 further comprises an intermediate layer 16 which is at least partly positioned between the fabric layer 10 and the additional layer 15a. In this embodiment, the intermediate layer 16 is at least partly positioned between the additional layer 15a and a further additional layer 15b. The further additional layer 15b is preferably fixed to an inside face of the fabric layer 10 of the air-bag 9.

The intermediate layer 16 is fixed to both the additional layer 15a and the further additional layer 15b by a fixing means, such as adhesive and/or stitching to form a three layer reinforcement which is at least partly superimposed on the fabric layer 10. In some embodiments, the three layer reinforcement formed by the additional layers 15a, 15b and the intermediate layer 16 is a gas guide which is, for instance, a Y-sock, an H-sock, a tube or any other kind of gas guide.

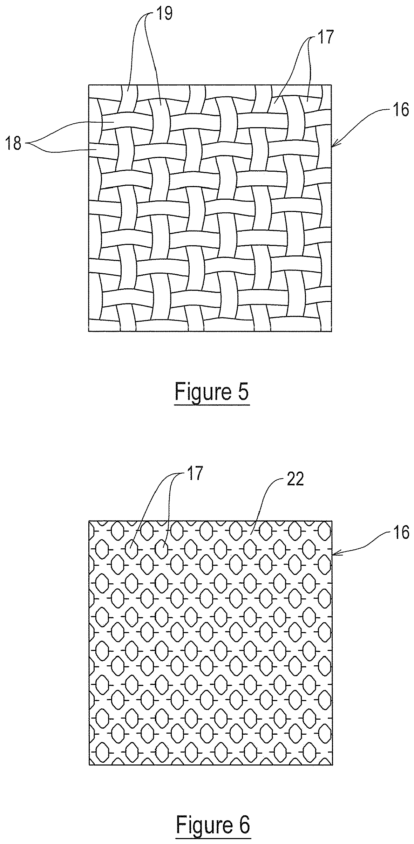

Referring now to figure 5 of the accompanying drawings, the intermediate layer 16 comprises a mesh structure which is provided with a plurality of cells 17. In this embodiment, the intermediate layer 16 is a woven structure formed from a plurality of loosely interwoven warp yarns 18 and weft yarns 19. The spaces between the loosely woven warp and weft yarns 18, 19 form the cells 17 of the intermediate layer 16.

In this embodiment, the largest width or diameter of each of the cells 17 is equal to or substantially equal to 11mm. In other embodiments the largest width or diameter of each of the cells 17 is between 3mm and 20mm.

In this embodiment, the density of the warp and weft yarns 18, 19 of the intermediate layer 16 is 22 threads/cm in the warp direction and 90 threads/cm in the weft direction.

In this embodiment, the gas permeability of the intermediate layer 16 is substantially five times greater than the gas permeability of the fabric layer 10 of the air-bag 9.

In this embodiment, the intermediate layer 16 is of Nylon. However, in other embodiments, the intermediate layer 16 comprises at least one material selected from a group including Nylon, aramid, polycarbonate, basalt and Nomex™.

In this embodiment, the intermediate layer 16 is a woven structure. However, in another embodiment, the intermediate layer 16 is a knitted structure. The knitted structure comprises a set of connected loops from a series of yarns in a weft or warp direction. The knitted structure is loose and the spaces between the yarns form a plurality of cells that are equivalent to the cells 17 of the embodiment described above.

In an embodiment of the invention, the plurality of cells 17 provided in the mesh structure of the intermediate layer 16 contains a matter having a lower thermal conductivity than the warp or weft yarns of the fabric layer 10 of the air-bag 9. In this embodiment, the matter contained within the plurality of cells 17 is air. At ground level, air has a thermal conductivity of 0.024 Wm⁻¹K⁻¹.

The matter, which in this embodiment is air, is at least partly trapped within the cells 17 in the intermediate layer by the additional layers 15a, 15b. The additional layers 15a, 15b effectively close the open ends of each of the cells 17 in the intermediate layer 16 to provide discrete chambers within the intermediate layer 16.

In another embodiment, the thermal conductivity of the matter contained within the cells 17 is between 0.02 and 0.03 Wm⁻K⁻¹.

The air or other matter contained within the cells 17 of the intermediate layer 16 provides a thermal barrier which shields the fabric layer 10 of the air-bag 9 from heat from gas generated by the gas generator 12. In this embodiment, the additional layer 15a is superimposed on the fabric layer 10 on the inside of the air-bag 9 such that the structure of the additional layer 15a, the intermediate layer 16 and the further additional layer 15b shield the fabric layer 10 of the air-bag 9 from high temperature gases exerted towards the fabric layer 10 in the direction indicated generally by arrow 20 in figure 4.

The air trapped within the cells 17 in the intermediate layer 16 provides an effective thermal barrier which protects the fabric layer 10 of the air-bag 9. The structure formed by the additional layers 15a, 15b and the intermediate layer 16 reinforces the fabric layer 10 by protecting the fabric layer 10 from high temperatures from the gas output from the gas generator 12. The air within the cells 17 has a thermal conductivity of around 0.024 Wm⁻K⁻¹ which is significantly lower than the thermal conductivity of the warp and weft yarns of the layer of fabric 10. For instance, if the fabric layer 10 is of Nylon, the yarns would have a thermal conductivity of approximately 0.2 Wm⁻¹K⁻¹.

The warp and weft yarns 18, 19 of the intermediate layer 16 contact the additional layers 15a, 15b and would provide some thermal conductivity between the additional layers 15a, 15b which is conducted to the fabric layer 10. However, the air-filled cells 17 between the warp and weft yarns 18, 19 of the intermediate layer 16 provide regions of low thermal conductivity such that the overall thermal conductivity across the intermediate layer 16 is significantly lower than the thermal conductivity of the fabric 10 of the air-bag 9.

In other embodiments, the further additional layer 15b is omitted and the intermediate layer 16 is fixed to the fabric layer 10 of the air-bag 9. The fabric layer 10 closes the cells 17 in the intermediate layer such that the matter within the cells provides a thermal barrier which protects the fabric layer 10 from heat from gas from the gas generator 12.

The intermediate layer 16 and the additional layers 15a, 15b provide an effective reinforcing structure which protects the fabric layer 10 from high temperatures. This effective reinforcement minimises or avoids the need to provide a high number of additional layers of fabric to reinforce the fabric layer 10, such as the multiple layers described above in a conventional gas guide. An embodiment of the invention is therefore lighter in weight and more flexible than a conventional air-bag where reinforcement is provided by a gas guide having many superimposed fabric layers and/or a plastic or metal reinforcement element.

The reduced number of reinforcing layers in an embodiment of the invention reduces the complexity and cost of manufacturing the air-bag as compared with a conventional air-bag that uses a gas guide having a large number of superimposed fabric layers and/or a plastic or metal reinforcement element. Referring now to figure 6 of the accompanying drawings, an air-bag of a further embodiment of the invention is identical to the air-bag 9 of the embodiment described above, except that the intermediate layer 16 is of plastic. In this embodiment, the intermediate layer 16 is an extruded polymer structure.

The intermediate layer 16 comprises a plastic mesh structure 22 with spaces provided in the mesh structure 22 that form the cells 17 in the intermediate structure 16. The relatively poor thermal conductivity of the matter contained within the cells 17 of the intermediate layer 16 of this further embodiment enable the intermediate layer 16 to provide an effective thermal barrier in the same way as the intermediate layer 16 in the embodiments described above.

In this embodiment, the thickness of the mesh structure 22 is equal to or substantially equal to 0.2 mm.

In this embodiment, the largest width or diameter of each of the cells 17 is equal to or substantially equal to 11mm. In other embodiments the largest width or diameter of each of the cells 17 is between 3mm and 20mm.

In this embodiment, the density of the mesh structure 22 of the intermediate layer 16 is 22 mesh/cm in a first direction and 90 mesh/cm in a second direction that is perpendicular to the first direction.

In this embodiment, the gas permeability of the mesh structure 22 is substantially five times greater than the gas permeability of the fabric layer 10 of the air-bag 9.

In the embodiments described above, the matter contained within the cells 17 in the intermediate layer 16 is air. However, in other embodiments, the cells 17 in the intermediate layer contain a different matter which has a lower thermal conductivity than the yarns of the fabric of the air-bag.

A method of manufacturing an air-bag of an embodiment comprises forming a reinforcement arrangement, such as a gas guide, by positioning the intermediate layer 16 at least partly between the additional layer 15a and the further additional layer 15b and fixing the layers 15a, 16 and 15b together. The method further comprises mounting the reinforcing arrangement within the air-bag 9 to protect the fabric 10 of the air-bag 9 from heat from gas from the gas generator 12.

A method of one embodiment of the invention comprises weaving the intermediate layer 16 from a plurality of yarns. In another embodiment, the method comprises knitting the intermediate layer 16 from a plurality of yarns.

In a further embodiment, the method comprises extruding a polymer to form the mesh structure of the intermediate layer 16.

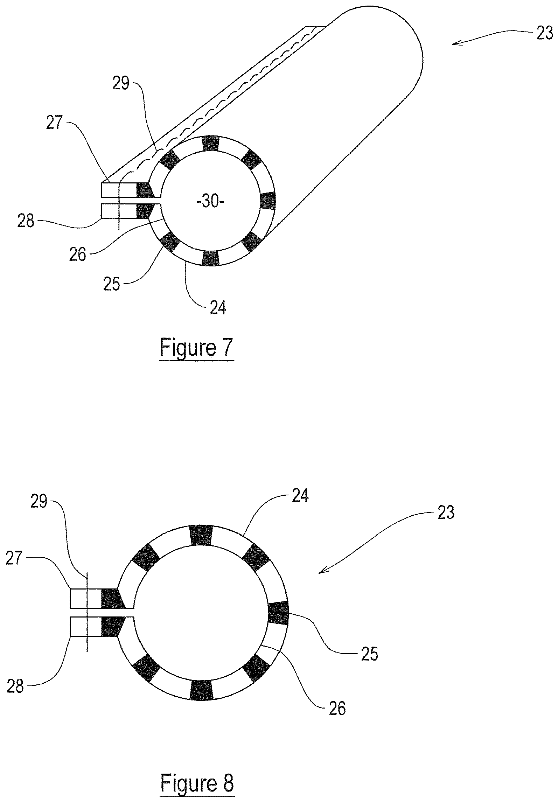

Referring now to figures 7 and 8 of the accompanying drawings, a reinforcement arrangement 23 of embodiments of the invention is in the form of a gas guide. The reinforcement arrangement 23 is configured to be fixed within an air-bag to reinforce a portion of the air-bag.

The reinforcement arrangement 23 comprises an outer layer 24, an intermediate layer 25 and an inner layer 26 which are respectively identical to the additional layer 15a, the intermediate layer 16 and the further additional layer 15b of the embodiments described above. The layers 24-26 of the reinforcement arrangement 23 are superimposed on one another and folded to form a generally cylindrical gas guide, as shown in figure 7. Opposing edges 27, 28 are stitched together by a thread 29 to provide a gas tight or substantially gas tight seal between the edges 27, 28.

In embodiments of the invention, the layers 24-26 of the reinforcement arrangement 23 may or may not be fixed to one another by other means besides the stitching of the threads 29. In further embodiments, the edges 27, 28 are fixed together by another means, such as adhesive.

The reinforcement arrangement 23 comprises a hollow, open ended central tube 30 which is configured to be coupled fluidly to the gas inlet of an air-bag so that gas produced by a gas generator flows through the central tube 30. The layers 24-26 of the reinforcement arrangement 23 protect the fabric of an air-bag from the hot gases in the same manner as the embodiments described above.

A method of embodiments of the invention comprises manufacturing a reinforcement arrangement or gas guide, such as the reinforcement arrangement 23 described above. The method preferably also comprises mounting the reinforcement arrangement within an air-bag.

When used in this specification and the claims, the term "comprises" and "comprising" and variations thereof mean that specified features, steps or integers and included. The terms are not to be interpreted to exclude the presence of other features, steps or compounds.

## Claims

1. An air-bag for use in a vehicle, the air-bag comprising:
a fabric layer (10) comprising a plurality of interwoven warp and weft yarns;
an additional layer (15a) which is at least partly superimposed on a part of the fabric layer (10); and
an intermediate layer (16) which is at least partly positioned between the fabric layer (10) and the additional layer (15a), the intermediate layer (16) comprising a mesh structure which is provided with a plurality of cells (17), wherein the cells (17) are open ended chambers formed in the mesh structure of the intermediate layer (16) which contain a matter having a lower thermal conductivity than the warp and weft yarns of the fabric layer (10), and wherein the fabric layer (10) and the additional layer (15a) close the cells (17) such that the matter within the cells (17) provides a thermal barrier which protects the fabric layer (10) from heat from gas from a gas generator (12).

2. The air-bag of claim 1, wherein the thermal conductivity of the matter contained within the cells (17) is between 0.02 and 0.03 Wm⁻¹K⁻¹.

3. The air-bag of claim 1 or claim 2, wherein the matter contained within the cells (17) is air.

4. The air-bag of any one of the preceding claims, wherein the mesh structure of the intermediate layer (16) is a woven structure.

5. The air-bag of any one of claims 1 to 3, wherein the mesh structure of the intermediate layer (16) is a knitted structure.

6. The air-bag of claim 4 or claim 5, wherein the density of the warp and weft yarns (18, 19) of the intermediate layer (16) is 22 threads/cm in the warp direction and 90 threads/cm in the weft direction.

7. The air-bag of any one of the preceding claims, wherein the mesh structure of the intermediate layer (16) comprises at least one material selected from a group including Nylon, aramid, polycarbonate, basalt and Nomex™.

8. The air-bag of any one of claims 1 to 3, wherein the mesh structure of the intermediate layer (16) is of extruded plastic.

9. The air-bag of any one of the preceding claims, wherein the air-bag further comprises a further additional layer (15b) which is at least partly positioned between the intermediate layer (16) and the fabric layer (10).

10. The air-bag of claim 9, wherein the intermediate layer (16) is fixed to the additional layer (15a) and the further additional layer (15b) to form a reinforcement arrangement which is at least partly superimposed on the fabric layer (10).

11. The air-bag of any one of the preceding claims, wherein the largest width of each of the cells (17) of the intermediate layer (16) is between 3mm and 20mm.

12. The air-bag of any one of the preceding claims, wherein the gas permeability of the intermediate layer (16) is substantially five times greater than the gas permeability of the fabric layer (10).

13. A reinforcement arrangement for a vehicle air-bag, the arrangement comprising an intermediate layer (16) which is at least partly positioned between an additional layer (15a) and a further additional layer (15b), the intermediate layer (16) comprising a mesh structure which is provided with a plurality of cells (17), wherein the cells (17) are open ended chambers formed in the mesh structure of the intermediate layer (16) which contain a matter having a lower thermal conductivity than the warp and weft yarns of a fabric layer (10) of an air-bag, and wherein the additional layer (15a) and the further additional layer (15b) close the cells (17) such that the matter within the cells (17) provides a thermal barrier for protecting a fabric layer (10) of an air-bag from heat from gas from a gas generator (12).

14. A method of manufacturing an air-bag for use in a vehicle, the method comprising:
providing a fabric layer (10) comprising a plurality of interwoven warp and weft yarns;
providing a reinforcement arrangement by positioning an intermediate layer (16) at least partly between an additional layer (15a) and a further additional layer (15b), the intermediate layer (16) comprising a mesh structure which is provided with a plurality of cells (17), wherein the cells (17) are open ended chambers formed in the mesh structure of the intermediate layer (16) which contain a matter having a lower thermal conductivity than the warp and weft yarns of the fabric layer (10), and wherein the additional layer (15a) and the further additional layer (15b) close the cells (17) such that the matter within the cells (17) provides a thermal barrier for protecting the fabric layer (10) from heat from gas from a gas generator (12); and
superimposing the reinforcement arrangement on at least part of the fabric layer (10) to protect the fabric layer (10) from heat.

## Patentansprüche

1. Air-Bag zur Verwendung in einem Fahrzeug, wobei der Air-Bag umfasst:
eine Gewebeschicht (10) mit einer Vielzahl von verwobenen Kett- und Schussfäden;
eine zusätzliche Schicht (15a), die zumindest teilweise einem Teil der Gewebeschicht (10) überlagert ist; und
eine Zwischenschicht (16), die zumindest teilweise zwischen der Gewebeschicht (10) und der zusätzlichen Schicht (15a) angeordnet ist, wobei die Zwischenschicht (16) eine Maschenstruktur umfasst, die mit mehreren Zellen (17) versehen ist, wobei die Zellen (17) Kammern mit offenen Enden sind, die in der Maschenstruktur der Zwischenschicht (16) ausgebildet sind und eine Materie mit einer niedrigeren Wärmeleitfähigkeit als die Kett- und Schussfäden der Gewebeschicht (10) enthalten, und wobei die Gewebeschicht (10) und die zusätzliche Schicht (15a) die Zellen (17) derart verschließen, dass die Materie innerhalb der Zellen (17) eine Wärmesperre vorsieht, die die Gewebeschicht (10) vor Wärme von Gas von einem Gasgenerator (12) schützt.

2. Air-Bag nach Anspruch 1, wobei die Wärmeleitfähigkeit der in den Zellen (17) enthaltenen Materie zwischen 0,02 und 0,03 Wm⁻¹K⁻¹ liegt.

3. Air-Bag nach Anspruch 1 oder Anspruch 2, wobei die in den Zellen (17) enthaltene Materie Luft ist.

4. Air-Bag nach einem der vorhergehenden Ansprüche, wobei die Maschenstruktur der Zwischenschicht (16) eine gewebte Struktur ist.

5. Air-Bag nach einem der Ansprüche 1 bis 3, wobei die Maschenstruktur der Zwischenschicht (16) eine gewirkte Struktur ist.

6. Air-Bag nach Anspruch 4 oder Anspruch 5, wobei die Dichte der Kett- und Schussfäden (18, 19) der Zwischenschicht (16) in der Kettrichtung 22 Fäden/cm und in der Schussrichtung 90 Fäden/cm beträgt.

7. Air-Bag nach einem der vorhergehenden Ansprüche, wobei die Maschenstruktur der Zwischenschicht (16) mindestens ein Material umfasst, das aus einer Gruppe bestehend aus Nylon, Aramid, Polycarbonat, Basalt und Nomex™ ausgewählt ist.

8. Air-Bag nach einem der Ansprüche 1 bis 3, wobei die Maschenstruktur der Zwischenschicht (16) aus extrudiertem Kunststoff besteht.

9. Air-Bag nach einem der vorhergehenden Ansprüche, wobei der Air-Bag ferner eine weitere zusätzliche Schicht (15b) umfasst, die zumindest teilweise zwischen der Zwischenschicht (16) und der Gewebeschicht (10) angeordnet ist.

10. Air-Bag nach Anspruch 9, wobei die Zwischenschicht (16) an der zusätzlichen Schicht (15a) und der weiteren zusätzlichen Schicht (15b) befestigt ist, um eine Verstärkungsanordnung zu bilden, die der Gewebeschicht (10) zumindest teilweise überlagert ist.

11. Air-Bag nach einem der vorhergehenden Ansprüche, wobei die größte Breite jeder der Zellen (17) der Zwischenschicht (16) zwischen 3 mm und 20 mm liegt.

12. Air-Bag nach einem der vorhergehenden Ansprüche, wobei die Gasdurchlässigkeit der Zwischenschicht (16) im Wesentlichen fünf Mal größer als die Gasdurchlässigkeit der Gewebeschicht (10) ist.

13. Verstärkungsanordnung für einen Fahrzeug-Air-Bag, wobei die Anordnung eine Zwischenschicht (16) umfasst, die zumindest teilweise zwischen einer zusätzlichen Schicht (15a) und einer weiteren zusätzlichen Schicht (15b) angeordnet ist, wobei die Zwischenschicht (16) eine Maschenstruktur umfasst, die mit mehreren Zellen (17) versehen ist, wobei die Zellen (17) Kammern mit offenen Enden sind, die in der Maschenstruktur der Zwischenschicht (16) ausgebildet sind und eine Materie mit einer niedrigeren Wärmeleitfähigkeit als die Kett- und Schussfäden einer Gewebeschicht (10) eines Air-Bags enthalten, und wobei die zusätzliche Schicht (15a) und die weitere zusätzliche Schicht (15a) die Zellen (17) derart verschließen, dass die Materie innerhalb der Zellen (17) eine Wärmesperre vorsieht, um die Gewebeschicht (10) des Air-Bags vor Wärme von Gas von einem Gasgenerator (12) zu schützen.

14. Verfahren zur Herstellung eines Air-Bags zur Verwendung in einem Fahrzeug, wobei das Verfahren umfasst:
Vorsehen einer Gewebeschicht (10) mit einer Vielzahl von verwobenen Kett- und Schussfäden;
Vorsehen einer Verstärkungsanordnung durch Anordnen einer Zwischenschicht (16) zumindest teilweise zwischen einer zusätzlichen Schicht (15a) und einer weiteren zusätzlichen Schicht (15b), wobei die Zwischenschicht (16) eine Maschenstruktur umfasst, die mit mehreren Zellen (17) versehen ist, wobei die Zellen (17) Kammern mit offenen Enden sind, die in der Maschenstruktur der Zwischenschicht (16) ausgebildet sind und eine Materie mit einer niedrigeren Wärmeleitfähigkeit als die Kett- und Schussfäden der Gewebeschicht (10) enthalten, und wobei die zusätzliche Schicht (15a) und die weitere zusätzliche Schicht (15a) die Zellen (17) derart verschließen, dass die Materie innerhalb der Zellen (17) eine Wärmesperre vorsieht, um die Gewebeschicht (10) vor Wärme von Gas von einem Gasgenerator (12) zu schützen; und
Überlagern der Verstärkungsanordnung auf mindestens einem Teil der Gewebeschicht (10), um die Gewebeschicht (10) vor Wärme zu schützen.

## Revendications

1. Coussin gonflable de sécurité destiné à un véhicule, le coussin gonflable de sécurité comprenant :
une couche de tissu (10) comprenant une pluralité de fils de chaîne et de trame entrelacés,
une couche supplémentaire (15a) qui est au moins partiellement superposée à une partie de la couche de tissu (10), et
une couche intermédiaire (16) qui est au moins partiellement disposée entre la couche de tissu (10) et la couche supplémentaire (15a), la couche intermédiaire (16) comprenant une structure à mailles pourvue d'une pluralité de cellules (17) ; lesdites cellules (17) consistant en des cavités à extrémités ouvertes formées dans la structure à mailles de la couche intermédiaire (16) et contenant une matière présentant une conductivité thermique inférieure à celle des fils de chaîne et de trame de la couche de tissu (10) ; et la couche de tissu (10) et la couche supplémentaire (15a) fermant les cellules (17) de manière que la matière présente dans les cellules (17) assure une barrière thermique protégeant la couche de tissu (10) de la chaleur du gaz issu d'un générateur de gaz (12).

2. Coussin gonflable de sécurité selon la revendication 1, dans lequel la conductivité thermique de la matière contenue dans les cellules (17) se situe entre 0,02 et 0,03 Wm⁻¹K⁻¹.

3. Coussin gonflable de sécurité selon la revendication 1 ou la revendication 2, dans lequel la matière contenue dans les cellules (17) est de l'air.

4. Coussin gonflable de sécurité selon l'une quelconque des revendications précédentes, dans lequel la structure à mailles de la couche intermédiaire (16) est une structure tissée.

5. Coussin gonflable de sécurité selon l'une quelconque des revendications 1 à 3, dans lequel la structure à mailles de la couche intermédiaire (16) est une structure tricotée.

6. Coussin gonflable de sécurité selon la revendication 4 ou la revendication 5, dans lequel le nombre des fils de chaîne et de trame (18, 19) de la couche intermédiaire (16) est de 22 fils/cm dans le sens de la chaîne et 90 fils/cm dans le sens de la trame.

7. Coussin gonflable de sécurité selon l'une quelconque des revendications précédentes, dans lequel la structure à mailles de la couche intermédiaire (16) comprend au moins un matériau choisi dans le groupe comprenant le nylon, l'aramide, le polycarbonate, le basalte et le Nomex™.

8. Coussin gonflable de sécurité selon l'une quelconque des revendications 1 à 3, dans lequel la structure à mailles de la couche intermédiaire (16) est en plastique extrudé.

9. Coussin gonflable de sécurité selon l'une quelconque des revendications précédentes, dans lequel le coussin gonflable de sécurité comprend en outre une autre couche supplémentaire (15b) au moins partiellement disposée entre la couche intermédiaire (16) et la couche de tissu (10).

10. Coussin gonflable de sécurité selon la revendication 9, dans lequel la couche intermédiaire (16) est fixée à la couche supplémentaire (15a) et à l'autre couche supplémentaire (15b) pour former un ensemble de renfort qui est au moins partiellement superposé à la couche de tissu (10).

11. Coussin gonflable de sécurité selon l'une quelconque des revendications précédentes, dans lequel la plus grande dimension des cellules (17) de la couche intermédiaire (16) se situe entre 3 mm et 20 mm.

12. Coussin gonflable de sécurité selon l'une quelconque des revendications précédentes, dans lequel la perméabilité aux gaz de la couche intermédiaire (16) est sensiblement cinq fois supérieure à la perméabilité aux gaz de la couche de tissu (10).

13. Ensemble de renfort pour un coussin gonflable de sécurité de véhicule, l'ensemble comprenant une couche intermédiaire (16) au moins partiellement disposée entre une couche supplémentaire (15a) et une autre couche supplémentaire (15b), la couche intermédiaire (16) comprenant une structure à mailles pourvue d'une pluralité de cellules (17), les cellules (17) consistant en des cavités à extrémités ouvertes formées dans la structure à mailles de la couche intermédiaire (16) et contenant une matière présentant une conductivité thermique inférieure à celle des fils de chaîne et de trame d'une couche de tissu (10) du coussin gonflable de sécurité ; et la couche supplémentaire (15a) et l'autre couche supplémentaire (15b) fermant les cellules (17) de manière que la matière présente dans les cellules (17) assure une barrière thermique pour protéger la couche de tissu (10) du coussin gonflable de sécurité de la chaleur du gaz issu d'un générateur de gaz (12).

14. Procédé de fabrication d'un coussin gonflable de sécurité destiné à un véhicule, le procédé comprenant :
la mise à disposition d'une couche de tissu (10) comprenant une pluralité de fils de chaîne et de trame entrelacés,
la mise à disposition d'un ensemble de renfort en disposant une couche intermédiaire (16) au moins partiellement entre une couche supplémentaire (15a) et une autre couche supplémentaire (15b), la couche intermédiaire (16) comprenant une structure à mailles pourvue d'une pluralité de cellules (17), les cellules (17) consistant en des cavités à extrémités ouvertes formées dans la structure à mailles de la couche intermédiaire (16) et contenant une matière présentant une conductivité thermique inférieure à celle des fils de chaîne et de trame de la couche de tissu (10) ; et la couche supplémentaire (15a) et l'autre couche supplémentaire (15b) fermant les cellules (17) de manière que la matière présente dans les cellules (17) assure une barrière thermique pour protéger la couche de tissu (10) de la chaleur du gaz issu d'un générateur de gaz (12), et
la superposition de l'ensemble de renfort à une partie au moins de la couche de tissu (10) afin de protéger la couche de tissu (10) de la chaleur.
